# EUROPEAN PATENT SPECIFICATION

(11) **EP 2 070 762 B1**
(45) Date of publication and mention of the grant of the patent: **19.01.2011**
(21) Application number: 08075867.5
(22) Date of filing: 10.11.2008
(51) Int. Cl.: B60N 2/427

(54) **Vehicle seat**
Fahrzeugsitz
Siège de véhicule

(30) Priority: 13.11.2007 NL 1034678
(43) Date of publication of application: 17.06.2009
(73) Proprietor: Maxi Miliaan B.V., 5704 RD Helmond (NL)
(72) Inventor: Schrooten, Mark, 2020 Antwerpen (BE); Wouters, Vincent Arnoud, 5707 NG Helmond (NL); Rutjes, Nelis, 4811 TV Breda (NL); Van Hassel, Edwin, 2497 ZX Den Haag (NL)
(74) Representative: Veldman-Dijkers, Cornelia G. C.

(56) References cited:
- EP-A- 1 577 153
- DE-A1- 19 840 728
- US-A- 3 638 254
- US-A- 5 409 200
- US-A- 5 551 673

## Description

The invention relates to a child vehicle seat that can be detachably mounted in a vehicle, which child vehicle seat comprises a backrest and side walls positioned on either side of said backrest.

Such child vehicle seats are well known. By the known child vehicle seats, in case of a collision, when a child's head comes into contact with one of the side walls, the force exerted on the child's head is relatively high and is not well distributed.

The object of the invention is to provide a child vehicle seat with side walls, which will deform in a gradual manner upon exertion of a force on the element, resulting in a better distribution and a gradual absorption of a force being exerted thereon.

This object is accomplished with the child vehicle seat according to the invention in that the side walls are each at least partially provided with a support comprising a number of deformable elements arranged adjacent to each other, which deformable elements each comprise a wall portion and at least two deformable ribs extending at an angle from the wall portion, whilst ends of the deformable ribs remote from wall portions are connected by strips that extend parallel to the wall portions.

With comparatively small children it is important that in case of a collision, when a child's head comes into contact with one of the side walls, the force exerted on the child's head is absorbed in a gradual manner and distributed over the entire contact area between the head and the side wall. Since the support of each side wall is provided with a number of deformable elements arranged adjacent to each other, the force exerted on the support in case of a collision will be distributed over the various deformable elements. In this way an even distribution of forces is realised. The at least two reformable ribs moreover ensure that the force will be absorbed in a gradual manner. The deformable element preferably comprises at least three ribs, so that a stable compression without rotation or translation is realised.

The support according to the invention is highly suitable for being incorporated in side walls of a child vehicle seat, which side walls frequently have irregular shapes.

The strips connect ends of the ribs firmly together in a simple manner.

It has to be noticed that from DE-A1-198.40.728 a vehicle seat is known, wherein a headrest is provided with a bellows-shaped element. The element is capable of deformation for absorbing energy in case of a collision, when the head of a person seated in the vehicle seat impacts with the headrest with comparatively much force.

The bellows-shaped element is frustoconical and comprises a number of steps. It has been found that when such a deformable element is used, the resistance to deformation increases as the element is further deformed. Moreover, the known headrest comprises only one deformable element, as a result of which the exertion of forces on the deformable element takes place via a relatively small part of the head, so that a relatively great force is exerted on the head at the location of said part of the head.

One embodiment of the child vehicle seat according to the invention is characterised in that the ribs will deform to positions located at least partially under the wall portion when a relatively large force is exerted on the wall portion in a direction towards the ribs, transversely to the wall portion.

Since the ribs move at least partially, and preferably entirely, under the wall portion upon deforming, the ribs will not hamper the deforming ribs of adjacent elements.

Another embodiment of the child vehicle seat according to the invention is characterised in that the strips are arranged in a grid of a first number of strips extending parallel to each other and a second number of strips extending transversely to said first number of strips.

Such a grid is easy to realise. As a result of being arranged in such a grid, the strips form a solid base for supporting the ribs and the wall portions connected thereto.

Yet another embodiment of the child vehicle seat according to the invention is characterised in that the spacing between the strips is larger than the dimension of the wall portion between said strips.

As a result, the ribs tend to deform to a position between the strips and consequently to a position at least partially under the wall portion, so that the ribs will not hamper adjacent elements or be hampered by said adjacent elements.

Such a support is moreover easy to produce, for example by means of an injection moulding process, and can be removed from a mould used in said injection moulding process in a simple manner.

Yet another embodiment of the child vehicle seat according to the invention is characterised in that the transition from the ribs to the wall portion and/or the strip extends along comparatively gradual lines.

The transition has a radius of curvature of minimally 2 mm, for example.

As a result of such a gradual transition, a rib will roll over the transition, as it were, when a force is exerted in longitudinal direction on the rib, whilst the radius of curvature will gradually increase. Depending on the magnitude, the direction and the speed of the force, the rib may also buclde.

Yet another embodiment of the child vehicle seat according to the invention is characterised in that the ribs include an obtuse angle with the wall portion.

Because of the use of such an obtuse angle, the rib is easy to produce by means of a plastic injection moulding process and can be removed from a mould in a simple manner.

One embodiment of the child vehicle seat according to the invention is characterised in that said obtuse angle is greater than 90.5 degrees.

Such an angle makes it easy to remove the mould from the support when an injection moulding process is used.

Yet another embodiment of the child vehicle seat according to the invention is characterised in that the length of the ribs is smaller than the spacing between two opposite ribs.

As a result, ribs positioned opposite each other will not touch each other and hamper each other when the ribs are folded double under the wall portion, as it were. The wall portion is preferably relatively stiff, so that the wall portion will transmit the forces to the deformable ribs without deforming of the wall portion.

Yet another embodiment of the child vehicle seat according to the invention is characterised in that the wall portion is rectangular and provided with two ribs having a width smaller than or approximately equal to half the dimension of a side of the wall portion to which the ribs are connected, and with a rib having a width approximately equal to the dimension of the side to which said one rib is connected, which ribs are spaced some distance apart.

It has been found that an element thus configured ensures that adequate and gradual transmission of forces, without any translations of the wall portion in the plane of the wall portion or rotations of said wall portion taking place.

Another embodiment of the child vehicle seat according to the invention is characterised in that the two ribs having a width smaller than or approximately equal to half the dimension of the side of the wall portion to which the ribs are connected are positioned opposite each other.

The relatively small ribs are in that case located near the side of the wall portion that is not provided with a rib.

The wide ribs of adjacent elements are preferably positioned opposite each other or on sides of the elements facing away from each other. In this way there can be hardly any contact between the wide ribs and the narrow ribs upon deformation of said wide ribs.

Yet another embodiment of the child vehicle seat according to the invention is characterised in that the deformable elements comprise wall portions having mutually different dimensions, with comparatively small wall portions having comparatively short ribs and comparatively large wall portions having comparatively long ribs.

In this way the support can be realised in practically any shape that may be desired, whilst the support may be provided with deformable elements over the entire area thereof. The deformable elements preferably have a length, height and width proportion of about 1 : 1 : 1.

The invention will now be explained in more detail with reference to the drawings, in which:
Figure 1 is a perspective view of a child vehicle seat according to the invention;
Figure 2 is a perspective view of the support of the child vehicle seat shown in figure 1;
Figure 3 is a perspective view of another support according to the invention;
Figures 4A-4D are perspective views of the deformation of a deformable element;
Figure 5 is a perspective view of another deformable element.

Like parts are indicated by the same numerals in the figures.

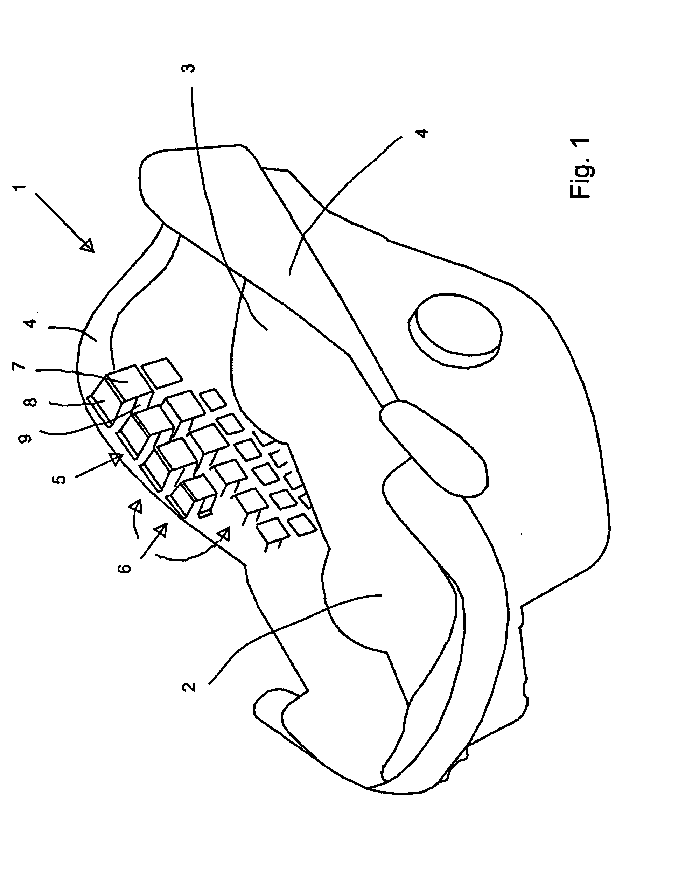

Figure 1 shows a child vehicle seat 1 according to the invention, which comprises a seat portion 2, a backrest 3 connected to said seat portion 2 and side walls 4 positioned on either side of the backrest 3. Usually, such a child vehicle seat 1 is furthermore provided with a carrying bracket (not shown) and with a harness system for securing a child in the child vehicle seat 1 by means of the harness system. The child vehicle seat 1 as described so far is known per se and -will not be explained in more detail herein, therefore.

The child vehicle seat 1 according to the invention is provided with a support 5 in both side walls 4, which support comprises a number of deformable elements 6 arranged adjacent to each other. Each deformable element 6 comprises a wall portion 7 and two ribs 8, 9 extending at an angle from said wall portion 7.

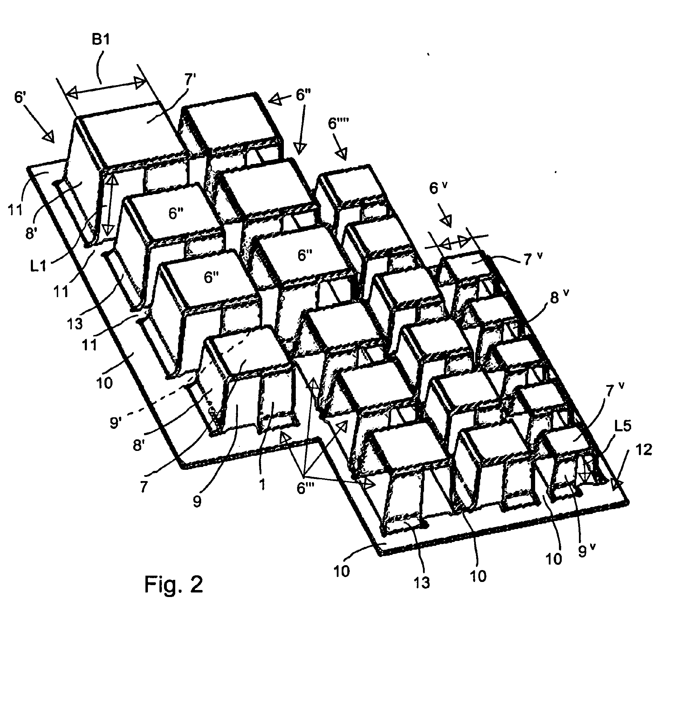

The support 5 is clearly shown in figure 2. The support 5 is provided with cubic elements 6^{I}, 6^{II}, 6^{III}, 6^{IV}, 6^{V}, each one being smaller than the preceding element. The element 61 has a square wall portion 7 having a width B1 and a height L1. The element 6^{IV} is the smallest element and has a width B5 and a height L5.

Each element 6 is provided with a rib 8', 8^{V} having a width equal to the width of the wall portion 7^{I}, 7^{V} to which it is connected. Each element is further provided with two opposite ribs 9^{I} having a width equal to half the width of the wall portion 7^{I}, 7^{V} to which it is connected.

All the ribs 8, 9 are connected to strips 10, 11 with ends remote from the walls 7, which strips 10 extend parallel to the ribs 8, whilst the strips 11 extend parallel to the ribs 9. The strips 10, 11 jointly form a grid 12.

The ribs include an obtuse angle of about 90.5 degrees with the wall portion 7. The transition between the wall portion 7 and the ribs 8, 9 is comparatively acute. The transition between the ribs 8, 9 and the strips 11, 12, on the other hand, is gradual and extends along a curve having a radius of curvature of, for example, 2-4 mm.

As is shown in figure 2, each wall portion 7 has one side that is not provided with a rib. Rows of elements 6 are so arranged relative to each other that sides of the wall portion 7 not provided with a rib face towards each other or that the sides of the wall portions 7 that are provided with ribs 8 face towards each other. In this way the wide ribs 8 will neither hamper the narrow ribs 9 upon deforming to a position under the wall portion nor upon deforming to a position beside the wall portion.

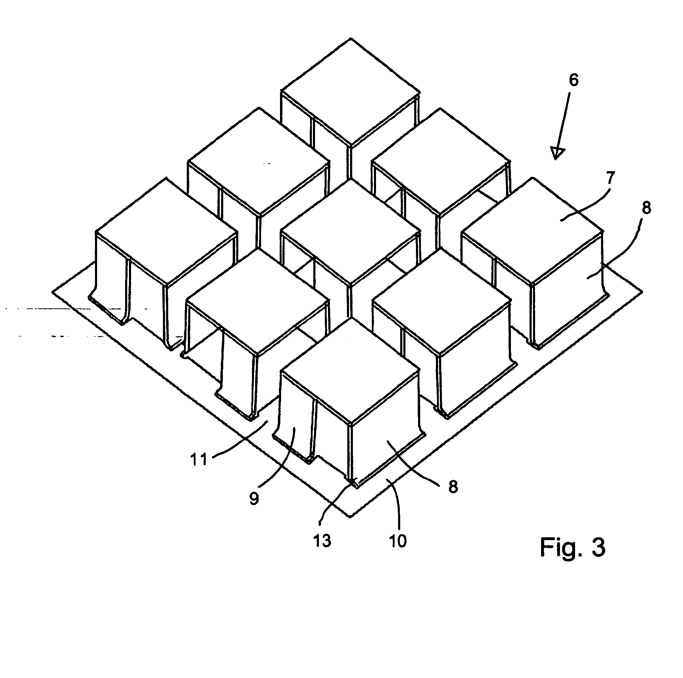

Figure 3 shows an embodiment of the support in which all the elements 6 have the same size.

As already indicated before, the child vehicle seat 1 is provided with supports 5 incorporated in the side walls 4. The supports 5 are preferably filled with a plastic foam, for example of polystyrene, between the elements and coated with a liner. The plastic foam is provided in the spaces between the elements 6, above the strips 10, 11. As a result, the exterior of the child vehicle seat is smooth, soft and comfortable to the touch. In this way the child vehicle seat 1 can be given any desired shape, without the appearance of the child vehicle seat 1 being adversely affected by the supports 5. Since the supports 5 are located relatively close below the liner, the support 5 will be capable of adequately absorbing the force exerted on the support 5 by the child's head in case of a collision.

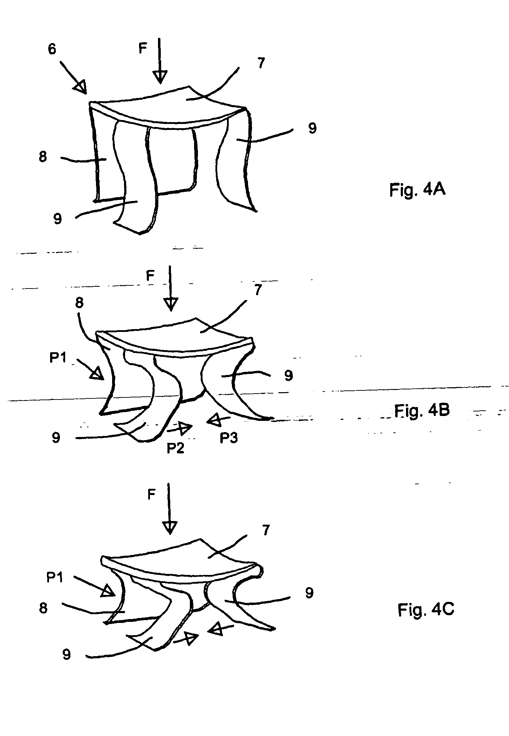

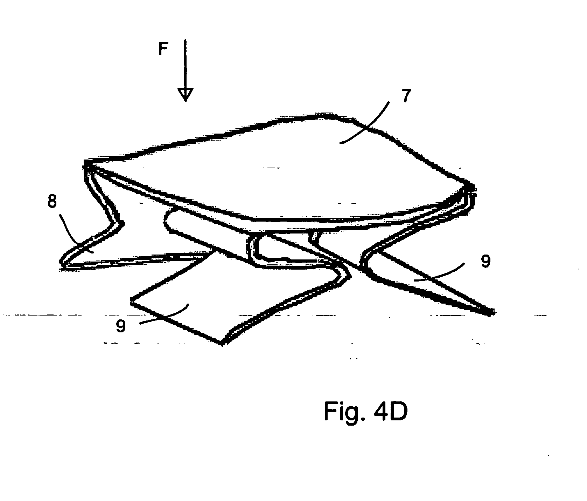

In figures 4A-4D the absorption of a force F being exerted on a deformable element 6 is explained in more detail. Figure 4A shows a deformable element 6 as provided in the support 5 shown in figure 2, in a position in which a force F is exerted on the element 6. Said force F results in deformation of the ribs 8, 9, causing the parts of the ribs 8, 9 that are located between the wall portion 7 and the strips 10, 11 to move in the directions indicated by the arrows P1, P2, P3, via the positions shown in figures 4B and 4C, to the position shown in figure 4D. As a result of said deformation of the ribs 8, 9, the wall portion 7 is moved in the direction of the strips 10, 11. It has been found that the force required for deforming the ribs 8, 9 remains substantially uniform during said movement of the wall portion 7. Said uniform force leads to an adequate, gradual energy absorption.

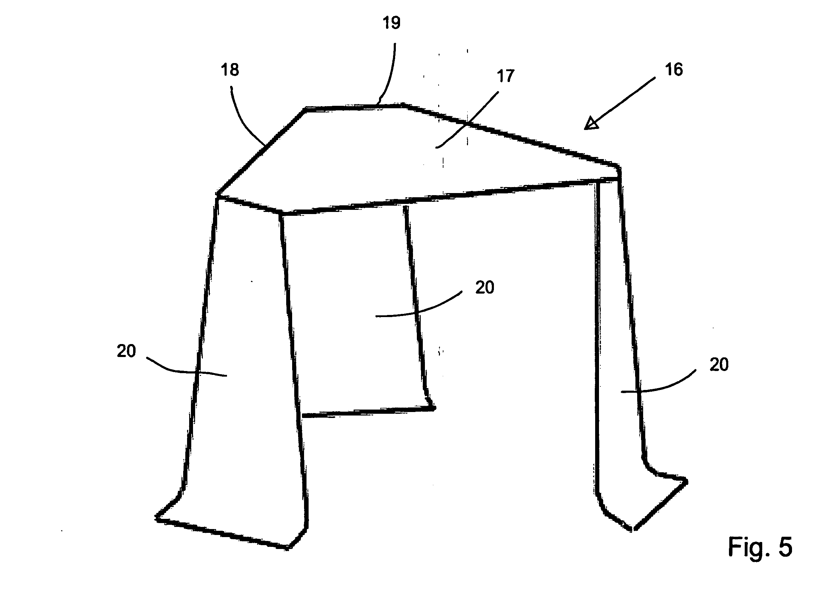

Figure 5 shows another embodiment of a deformable element 16, which is provided with a hexagonal wall portion 17. The wall portion 17 has two relatively long sides 18 and two short sides 19 lying therebetween. Ribs 20 extend from the relatively short side 19, which ribs are wider on a side remote from the wall portion 17 than near the wall portion 17. On sides remote from the wall portion 17, the ribs 20 are connected to ribs 20 of adjacent elements 16 by means of strips. Such an element 16 is rotationally stable.

The support is preferably made of a material having a relatively high value of elongation at break, such as polypropylene, for example.

The wall portions can also have different shapes, for example a rectangular shape. It is also possible to provide the elements with two ribs or more than three ribs.

## Claims

1. A child vehicle seat (1) that can be detachably mounted in a vehicle, which child vehicle seat (1) comprises a backrest (3) and side walls (4) positioned on either side of said backrest (3), **characterised in that** the side walls (4) are each at least partially provided with a support (5) comprising a number of deformable elements (6) arranged adjacent to each other, which reformable elements (6) each comprise a wall portion (7) and at least two reformable ribs (8, 9) extending at an angle from the wall portion (7), whilst ends of the deformable ribs (8, 9) remote from wall portions (7) are connected by strips (10, 11) that extend parallel to the wall portions (7).

2. A child vehicle seat (1) according to claim 1, **characterised in that** the ribs (8, 9) will deform to positions located at least partially under the wall portion (7) when a relatively large force is exerted on the wall portion (7) in a direction towards the ribs (8, 9), transversely to the wall portion (7).

3. A child vehicle seat (1) according to claim 1 or 2, **characterised in that** the strips (10, 11) are arranged in a grid of a first number of strips (10, 11) extending parallel to each other and a second number of strips (10, 11) extending transversely to said first number of strips (10, 11).

4. A child vehicle seat (1) according to any one of the preceding claims, **characterised in that** the spacing between the strips (10, 11) is larger than the dimension of the wall portion (7) between said strips (10, 11).

5. A child vehicle seat (1) according to any one of the preceding claims 3-5, **characterised in that** the transition from the ribs (8, 9) to the wall portion (7) and/or the strip extends along comparatively gradual lines.

6. A child vehicle seat (1) according to claim 5, **characterised in that** said transition has a radius of curvature of minimally 2 mm.

7. A child vehicle seat (1) according to any one of the preceding claims, **characterised in that** the ribs (8, 9) include an obtuse angle with the wall portion (7).

8. A child vehicle seat (1) according to claim 7, **characterised in that** said obtuse angle is greater than 90.5 degrees.

9. A child vehicle seat (1) according to any one of the preceding claims, **characterised in that** the length of the ribs (8, 9) is smaller than the spacing between two opposite ribs (8, 9).

10. A child vehicle seat (1) according to any one of the preceding claims, **characterised in that** the wall portion (7) is rectangular and provided with two ribs (8, 9) having a width smaller than or approximately equal to half the dimension of a side of the wall portion (7) to which the ribs (8, 9) are connected, and with a rib having a width approximately equal to the dimension of the side to which said one rib is connected, which ribs (8, 9) are spaced some distance apart.

11. A child vehicle seat (1) according to claim 10, **characterised in that** the two ribs (8, 9) having a width smaller than or approximately equal to half the dimension of the side of the wall portion (7) to which the ribs (8, 9) are connected are positioned opposite each other.

12. A child vehicle seat (1) according to any one of the preceding claims, **characterised in that** said wall portion (7) is square.

13. A child vehicle seat (1) according to any one of the preceding claims, **characterised in that** the deformable elements (6) comprise wall portions (7) having mutually different dimensions, with comparatively small wall portions (7) having comparatively short ribs (8, 9) and comparatively large wall portions (7) having comparatively long ribs (8, 9).

14. A child vehicle seat (1) according to any one of the preceding claims, **characterised in that** at least the space between adjacent elements (6) is filled with a plastic foam.

## Patentansprüche

1. Kinderfahrzeugsitz (1), der abnehmbar in einem Fahrzeug befestigt werden kann, und der eine Rückenlehne (3) und sich zu beiden Seiten der Rückenlehne (3) befindende Seitenwände (4) umfasst, **dadurch gekennzeichnet, dass** jede der Seitenwände (4) zumindest teilweise mit einem Träger (5) versehen sind, der eine Anzahl verformbarer Elemente (6) umfasst, die zueinander benachbart angeordnet sind, wobei jedes verformbare Element (6) einen Wandabschnitt (7) und mindestens zwei verformbare Rippen (8, 9) umfasst, die im Winkel zum Wandabschnitt (7) verlaufen, während von den Wandabschnitten (7) entfernte Enden der Rippen (8, 9) mittels parallel zu den Wandabschnitten (7) verlaufender Bänder (10, 11) verbunden sind.

2. Kinderfahrzeugsitz (1) nach Anspruch 1, **dadurch gekennzeichnet, dass** die Rippen (8, 9) sich zu Positionen verformen, die sich zumindest teilweise unter dem Wandabschnitt (7) befinden, wenn auf den Wandabschnitt (7) eine relativ große Kraft in Richtung auf die Rippen (8, 9) und quer zum Wandabschnitt (7) ausgeübt wird.

3. Kinderfahrzeugsitz (1) nach Anspruch 1 oder 2, **dadurch gekennzeichnet, dass** die Bänder (10, 11) in einem Gitter aus einer ersten Anzahl von parallel zueinander verlaufenden Bändern (10, 11) und einer zweiten Anzahl quer zu der ersten Anzahl von Bändern (10, 11) verlaufenden Bändern (10, 11) angeordnet sind.

4. Kinderfahrzeugsitz (1) nach einem der vorangehenden Ansprüche, **dadurch gekennzeichnet, dass** der Abstand zwischen den Bändern (10, 11) größer als die Abmessung des Wandabschnitts (7) zwischen diesen Bändern (10, 11) ist.

5. Kinderfahrzeugsitz (1) nach einem der vorangehenden Ansprüche 3 - 5, **dadurch gekennzeichnet, dass** der Übergang von den Rippen (8, 9) zum Wandabschnitt (7) und/oder dem Band längs vergleichsweise sanfter Linien verläuft.

6. Kinderfahrzeugsitz (1) nach Anspruch 5, **dadurch gekennzeichnet, dass** der Übergang einen Krümmungsradius von mindestens 2 mm hat.

7. Kinderfahrzeugsitz (1) nach einem der vorangehenden Ansprüche, **dadurch gekennzeichnet, dass** die Rippen (8, 9) mit dem Wandabschnitt (7) einen stumpfen Winkel einschließen.

8. Kinderfahrzeugsitz (1) nach Anspruch 7, **dadurch gekennzeichnet, dass** der stumpfe Winkel größer als 90,5 Grad ist.

9. Kinderfahrzeugsitz (1) nach einem der vorangehenden Ansprüche, **dadurch gekennzeichnet, dass** die Länge der Rippen (8, 9) kleiner als der Abstand zwischen zwei sich gegenüber liegenden Rippen (8, 9) ist.

10. Kinderfahrzeugsitz (1) nach einem der vorangehenden Ansprüche, **dadurch gekennzeichnet, dass** der Wandabschnitt (7) rechtwinklig ist und mit zwei Rippen (8, 9), deren Breite kleiner als oder etwa gleich der halben Abmessung einer Seite des Wandabschnitts (7) ist, mit dem die Rippen (8, 9) verbunden sind, und mit einer Rippe (8, 9), deren Breite etwa gleich der Abmessung der Seite ist, mit der die Rippe verbunden ist, versehen ist, wobei die Rippen (8, 9) einigen Abstand voneinander haben.

11. Kinderfahrzeugsitz (1) nach Anspruch 10, **dadurch gekennzeichnet, dass** die beiden Rippen (8, 9), deren Breite kleiner oder etwa gleich der halben Abmessung der Seite des Wandabschnitts (7) ist, mit dem die Rippen (8, 9) verbunden sind, sich einander gegenüber liegend angebracht sind.

12. Kinderfahrzeugsitz (1) nach einem der vorangehenden Ansprüche, **dadurch gekennzeichnet, dass** der Wandabschnitt (7) quadratisch ist.

13. Kinderfahrzeugsitz (1) nach einem der vorangehenden Ansprüche, **dadurch gekennzeichnet, dass** die verformbaren Elemente (6) Wandabschnitte (7) mit untereinander verschiedenen Abmessungen umfassen, wobei vergleichsweise kleine Wandabschnitte (7) vergleichsweise kurze Rippen (8, 9) und vergleichsweise große Wandabschnitte (7) vergleichsweise lange Rippen (8, 9) haben.

14. Kinderfahrzeugsitz (1) nach einem der vorangehenden Ansprüche, **dadurch gekennzeichnet, dass** zumindest der Raum zwischen benachbarten Elementen (6) mit einem Kunststoffschaum gefüllt ist.

## Revendications

1. Siège de véhicule pour enfant (1) qui peut être monté de manière amovible dans un véhicule, lequel siège de véhicule pour enfant (1) comprend un dossier (3) et des parois latérales (4) positionnées de chaque côté dudit dossier (3), **caractérisé en ce que** les parois latérales (4) sont chacune au moins partiellement munies d'un support (5) comprenant une pluralité d'éléments déformables (6) disposés adjacents l'un à l'autre, lesquels éléments déformables (6) comprennent chacun une portion de paroi (7) et au moins deux nervures déformables (8, 9) s'étendant en formant un angle par rapport à la portion de paroi (7), alors que des extrémités des nervures déformables (8, 9) éloignées des portions de paroi (7) sont reliées par des bandes (10, 11) qui s'étendent parallèlement aux portions de paroi (7).

2. Siège de véhicule pour enfant (1) selon la revendication 1, **caractérisé en ce que** les nervures (8, 9) se déforment dans des positions situées au moins partiellement sous la portion de paroi (7) quand une force relativement grande est exercée sur la portion de paroi (7) dans une direction vers les nervures (8, 9), transversalement à la portion de paroi (7).

3. Siège de véhicule pour enfant (1) selon la revendication 1 ou 2, **caractérisé en ce que** les bandes (10, 11) sont disposées dans une grille d'une première pluralité de bandes (10, 11) s'étendant parallèlement entre elles et une deuxième pluralité de bandes (10, 11) s'étendant transversalement à ladite première pluralité de bandes (10, 11).

4. Siège de véhicule pour enfant (1) selon l'une quelconque des revendications précédentes, **caractérisé en ce que** l'espacement entre les bandes (10, 11) est supérieure à la dimension de la portion de paroi (7) entre les bandes (10, 11).

5. Siège de véhicule pour enfant (1) selon l'une quelconque des revendications 3 à 5, **caractérisé en ce que** la transition des nervures (8, 9) à la portion de paroi (7) et/ou à la bande s'étend suivant des lignes comparativement progressives.

6. Siège de véhicule pour enfant (1) selon la revendication 5, **caractérisé en ce que** ladite transition a un rayon de courbure de 2 mm au minimum.

7. Siège de véhicule pour enfant (1) selon l'une quelconque des revendications précédentes, **caractérisé en ce que** les nervures (8, 9) présentent un angle obtus avec la portion de paroi (7).

8. Siège de véhicule pour enfant (1) selon la revendication 7, **caractérisé en ce que** ledit angle obtus est supérieur à 90,5 degrés.

9. Siège de véhicule pour enfant (1) selon l'une quelconque des revendications précédentes, **caractérisé en ce que** la longueur des nervures (8, 9) est inférieure à l'espacement entre deux nervures opposées (8, 9).

10. Siège de véhicule pour enfant (1) selon l'une quelconque des revendications précédentes, **caractérisé en ce que** la portion de paroi (7) est rectangulaire et munie de deux nervures (8, 9) ayant une largeur inférieure ou approximativement égale à la moitié de la dimension d'un côté de la portion de paroi (7) auquel les nervures (8, 9) sont reliées, et avec une nervure ayant une largeur approximativement égale à la dimension du côté auquel ladite une nervure est reliée, lesquelles nervures (8, 9) sont écartées d'une certaine distance.

11. Siège de véhicule pour enfant (1) selon la revendication 10, **caractérisé en ce que** les deux nervures (8, 9), ayant une largeur inférieure ou approximativement égale à la moitié de la dimension du côté de la portion de paroi (7) auquel les nervures (8, 9) sont reliées, sont positionnées opposées l'une à l'autre.

12. Siège de véhicule pour enfant (1) selon l'une quelconque des revendications précédentes, **caractérisé en ce que** ladite portion de paroi (7) est carrée.

13. Siège de véhicule pour enfant (1) selon l'une quelconque des revendications précédentes, **caractérisé en ce que** les éléments déformables (6) comprennent des portions de paroi (7) ayant mutuellement des dimensions différentes, avec des portions de paroi comparativement petites (7) ayant des nervures comparativement courtes (8, 9) et des portions de paroi comparativement grandes (7) ayant des nervures comparativement longues (8, 9).

14. Siège de véhicule pour enfant (1) selon l'une quelconque des revendications précédentes, **caractérisé en ce qu'**au moins l'espace entre des éléments adjacents (6) est rempli avec une mousse plastique.
